# DEMANDE DE BREVET EUROPEEN

(11) **EP 1 170 576 A1**
(43) Date de publication de la demande: **09.01.2002**
(21) Numéro de dépôt: 00401961.8
(22) Date de dépôt: 07.07.2000
(51) Int. Cl.: G01J 3/46, G01N 21/25, G06T 7/00

(54) **Spectres et cages chromatométriques, leur utilisation et la manière de les élaborer**

(71) Demandeur: Stapfer, Christian, 92160 Antony (FR); Bosch, Ulrich, 47169 Duisburg (DE)
(72) Inventeur: Stapfer, Christian, 92160 Antony (FR); Bosch, Ulrich, 47169 Duisburg (DE)

(57) **Abrégé**

La présente invention propose une nouvelle méthode d'analyse chromatométrique permettant de déterminer la composition chromatiques et l'homogénéité d'un produit quelconque.

Par traitement informatique d'une image numérique du produit en utilisant comme outil de travail un programme de codage binaire en couleur, on code l'ensemble des points constituant cette image afin d'en analyser la composition chromatique.

Les points ainsi codés sont répartis en spectres distincts pouvant être étalés pour augmenter le contraste de l'image ceci afin d'y déceler les moindres défauts de structure. Enfin, l'élaboration d'un spectre unique à trois dimensions permet une représentation graphique dans l'espace de la répartition de tous les points constitutifs de l'image selon leur couleur.

## Description

La présente invention concerne l'élaboration, par programmation informatique, de nouveaux outils analytiques permettant de déterminer de manière rigoureusement exacte et détaillée la composition chromatique des produits industriels les plus variés.

Nombreuses sont les applications techniques qui requièrent un jugement aussi objectif que possible sur la qualité relative d'un produit, tant en ce qui concerne sa couleur que son aspect structural.
On a alors généralement le choix entre, d'une part, l'examen direct de la surface dudit produit, soit par réflexion soit par transparence, et, d'autre part, l'analyse d'une image numérique de cette même surface telle qu'elle a pu être saisie par divers dispositifs de prise de vue tels que les caméras vidéo, les appareils photographiques numériques, les scanneurs de table ou à tambour, etc.

L'examen direct d'une éprouvette peut généralement se faire en ayant recours à des moyens optiques traditionnels tels qu'un photocolorimètre ou un spectrophotomètre pour en mesurer la couleur et une loupe binoculaire ou un microscope pour y détecter tout défaut de structure rendu visible par contraste.
De par leur principe de fonctionnement, lequel repose essentiellement sur une mesure du spectre d'absorption d'un produit à la lumière, les systèmes optiques de mesure de couleur sont strictement limités à ne pouvoir fournir qu'une valeur moyenne de la couleur de l'éprouvette et ceci pour la seule partie de l'éprouvette directement visée par l'appareil de mesure. Le spectrophotomètre ne donne aucune information sur l'hétérogénéité chromatique possible de l'éprouvette, autrement dit sur la répartition des différentes couleurs pouvant participer à cette couleur moyenne et toutes présentes sur l'ensemble de la surface cible.

Le microscope, quant à lui, n'est en mesure de révéler des défauts de structure dans la masse ou sur la surface visée que si ces défauts apparaissent suffisemment contrastés par rapport au reste de l'éprouvette.

L'analyse d'image numérique a le grand avantage de permettre la mise en mémoire d'une image sur ordinateur pour ensuite en analyser la composition point par point.
Le traitement informatique d'images numériques est une technique couramment utilisée mais jusqu'à présent peu apte à détecter de fines nuances de couleur et d'aspect de la matière car limitée, d'une part, par une résolution optique (nombre de points par unité de surface de l'image) relativement faible pour la plupart des systèmes actuels de prise de vue et, d'autre part, par l'absence de logiciels d'application permettant de mesurer l'homogénéité chromatique de produits industriels divers.

Nous proposons ici une nouvelle méthode analytique dite analyse chromatométrique permettant, au moyen d'un système informatisé original, non seulement de mesurer la couleur de n'importe quel objet dans les espaces de couleurs normalisés tels que RVB, CMJ, CIE L*a*b* et autres, à partir de son image numérique, mais aussi d'en déterminer avec précision la composition chromatique et, enfin, d'y détecter, par contraste spectral, des défauts de structure autrement invisibles.

Le système est un triptyque comportant essentiellement les trois phases de programmation binaire suivantes:
1° Le codage en couleur de l'ensemble des points constituant une image numérique afin d'en analyser la composition.
2° La mise en ordre de ces points codés sous forme de spectres distincts pouvant être étalés pour augmenter le contraste de l'image ceci afin d'y détecter les moindre défauts de structure.
3° L'élaboration d'un spectres unique à trois dimensions ayant la forme d'une cage et permettant une représentation graphique dans l'espace de la distribution de tous les points constitutifs de l'image selon leur couleur.

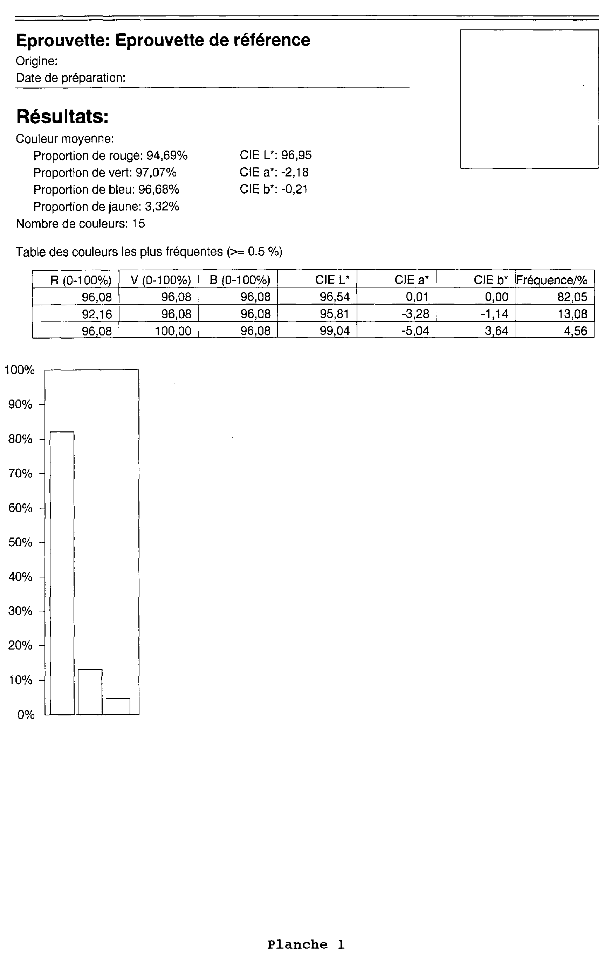

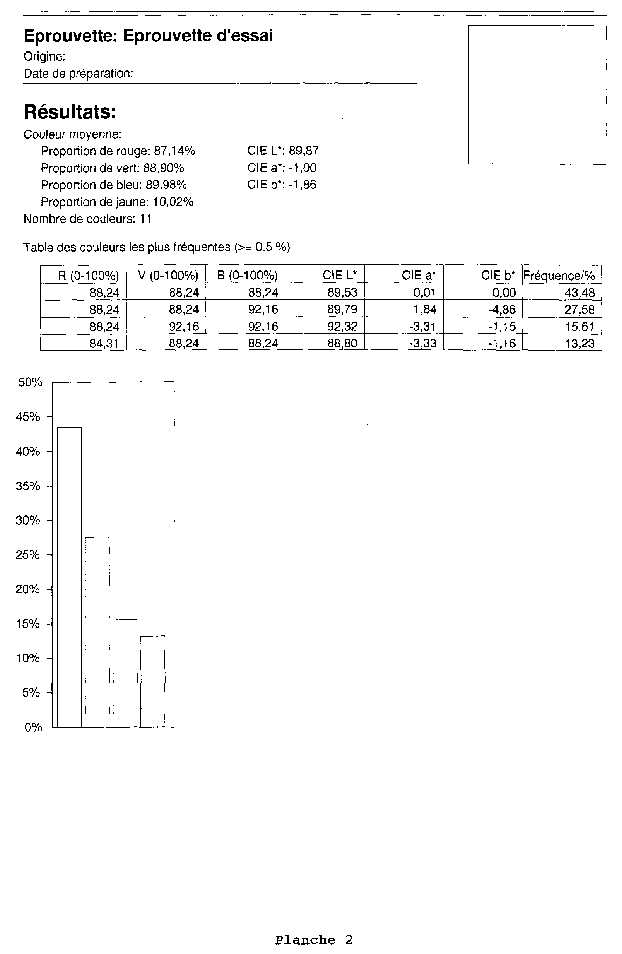

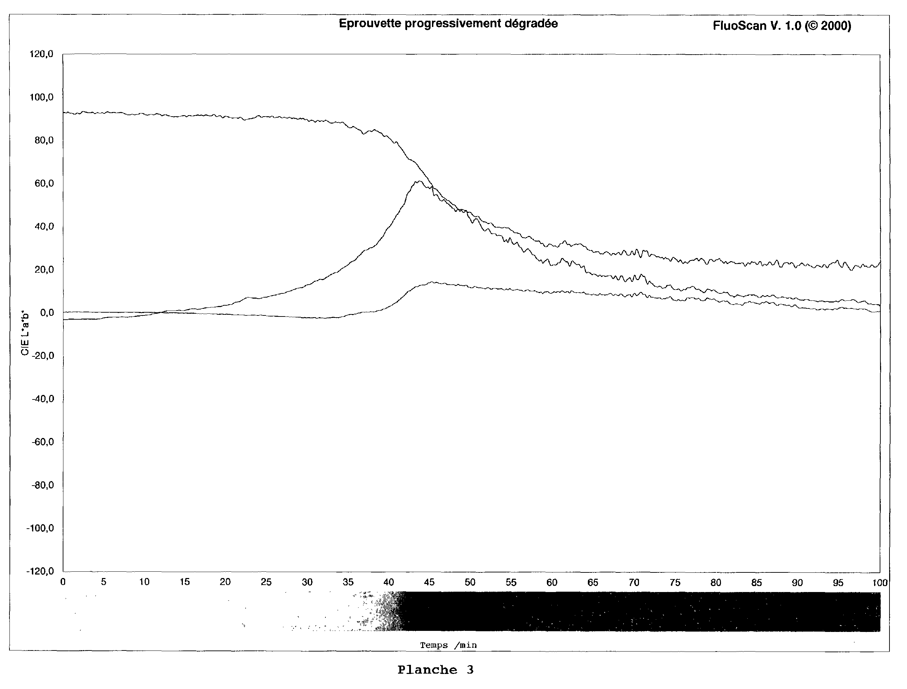

Utilisant les langages usuels de la programmation binaire, on décompose donc tout d'abord une image numérique, saisie par exemple par un scanneur de table équipé d'une source lumineuse de type lumière du jour, en la totalité de ses composantes ponctuelles. Le codage de chaque point dans un des espaces de couleurs classiques tels que RVB (rouge, vert bleu), son complémentaire CMJ(cyan, magenta, jaune) ou l'espace universel CIE L* (du -noir au +blanc) a* (du -vert au +rouge) b* (du -bleu au +jaune) permet alors de déterminer la couleur intrinsèque de chaque point constituant l'image. On obtient ainsi, enregistrée sur base de données, une liste de tous les points composant une image qui, si elle mesure par exemple un pouce carré, comporte, pour une résolution de 1200 dpi (points par pouce carré), mille deux cent points, chaque point étant classé selon sa couleur et selon ses coordonnées dans le plan de l'image, ceci quels que soient les moyens de prise de vue utilisés. Cette classification chromatométrique permet ensuite de déterminer de combien de couleurs se compose exactement l'éprouvette d'un produit quelconque dont on a analysé l'image enregistrée sur ordinateur. La couleur de l'ensemble de cette image, quelles que soient ses dimensions, est alors aisément obtenue par simple calcul mathématique de la moyenne.
Muni de cette information sur la composition chromatique d'une éprouvette de référence (Planche 1), il devient possible de comparer la couleur et l'homogénéité de celle-ci à celles d'une éprouvette d'essai (Planche 2) ayant subi un traitement semblable mais non identique à celui subi par l'éprouvette de référence.
Si l'hétérogénéité d'un produit est voulue, c'est-à-dire par exemple causée à dessein par la dégradation graduelle d'une éprouvette sur toute sa longueur en exposant celle-ci progressivement à la chaleur ou à la lumière, on obtient des courbes chromatométriques qui traduisent, selon l'espace de couleurs choisi pour la mesure, la progression détaillée de la décoloration de l'éprouvette en fonction du temps de son exposition à la chaleur ou à lumière (Planche 3).

Pour des raisons d'application pratique de la méthode dans les industries des peintures et des matières plastiques, nous avons préféré utiliser l'espace de couleurs universel CIE L*a*b* comme système de couleurs dans les exemples décrits. L'invention n'est cependant limitée ni à cet espace de couleurs pour le codage d'image ni à l'utilisation d'une source de lumière particulière lors de la saisie de l'image par quelque dispositif de prise de vue que ce soit.

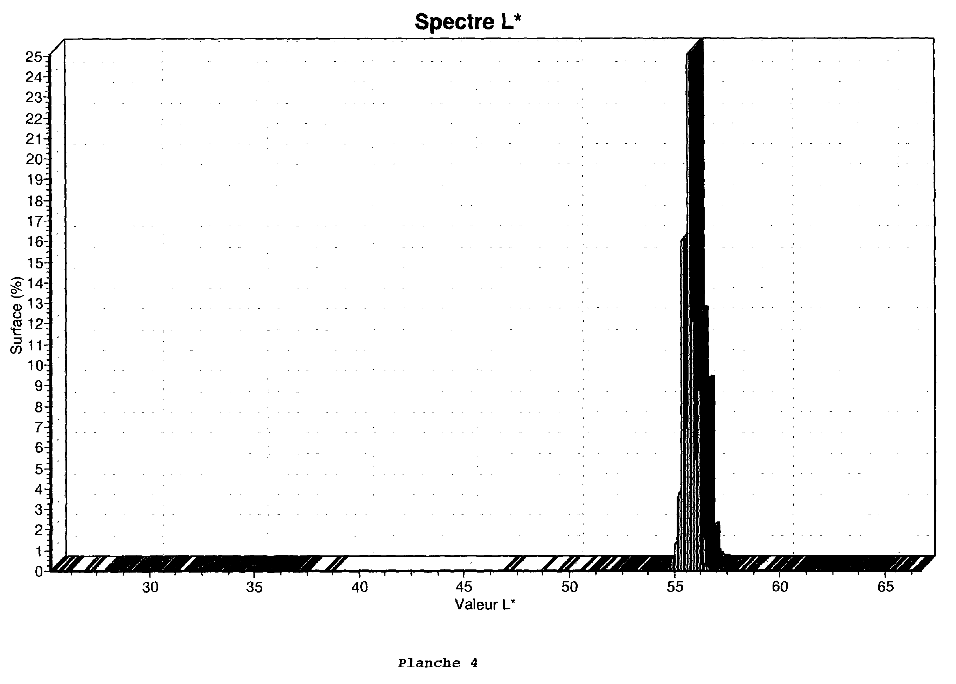

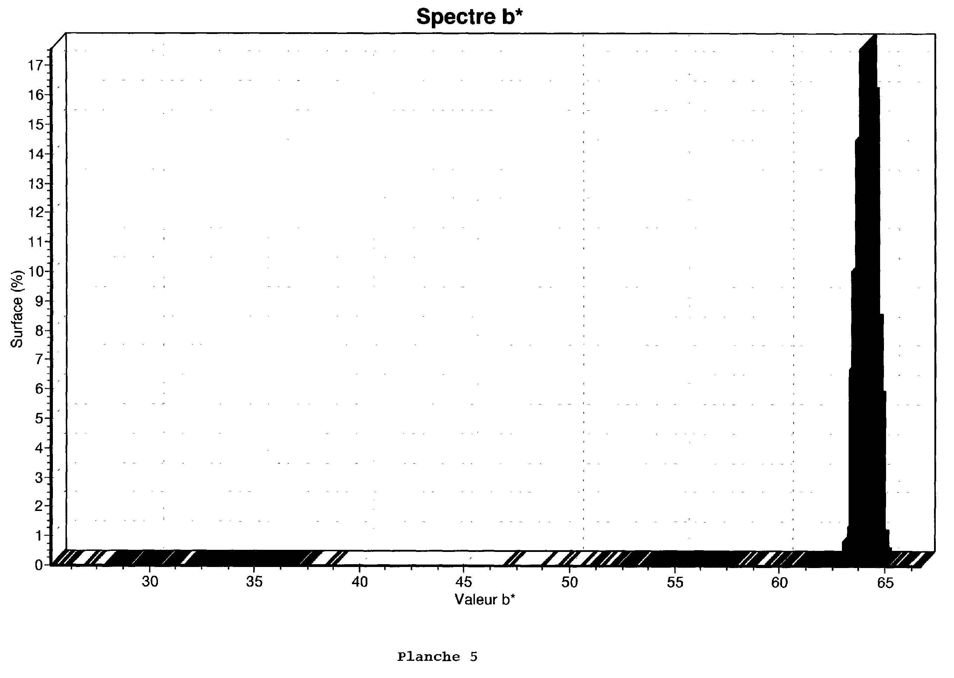

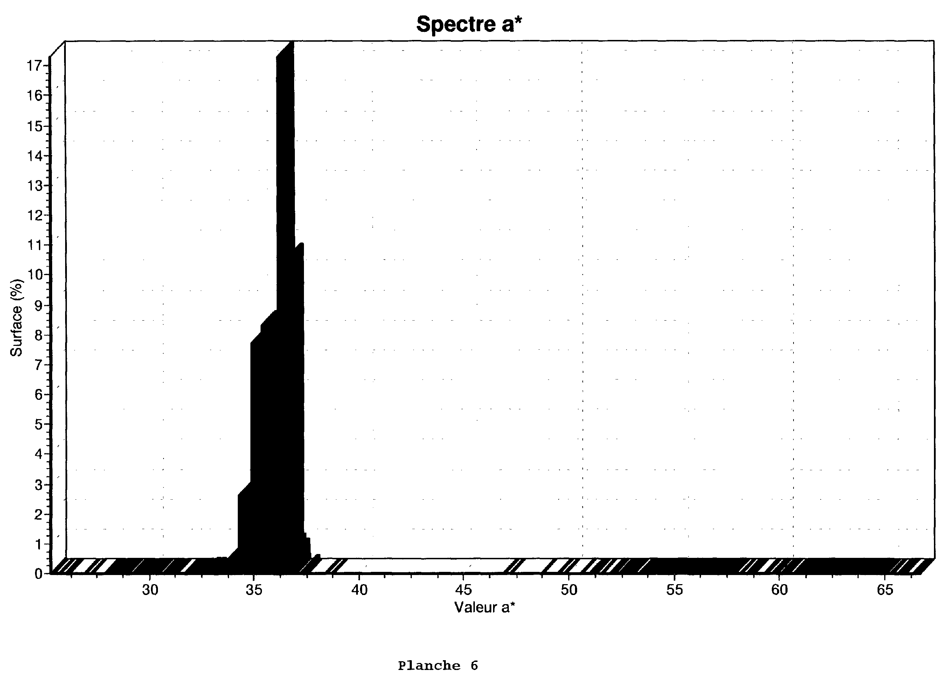

Le codage d'une image numérique dans l'espace de couleurs CIE L*a*b* permet, outre de décomposer cette image en ses composantes ponctuelles, d'élaborer, également par programmation binaire, trois spectres chromatométriques distincts caractérisant l'éprouvette dont on veut analyser l'image: Un spectre L* exprimant sous forme d'histogramme la répartition de tous les points de l'image selon leur clarté progressive du noir au blanc entre les valeurs 0 (noir) et 100 (blanc)(Planche 4).
- Un spectre a* exprimant de la même façon la répartition de tous les points de l'image selon leur chromaticité qui progresse du vert vers le rouge entre les valeurs -120 (vert) et +120 (rouge)(Planche 5).
- Un spectre b* exprimant de manière analogue la répartition de tous les points de l'image selon leur chromaticité qui progresse du bleu vers le jaune entre les valeurs -120 (bleu) et +120 (jaune)(Planche 6).

Selon la source de lumière utilisée lors de la saisie de l'image, ces spectres L*, a* et b* peuvent être des spectres soit de réflexion (coloration, décoloration) soit d'émission (fluorescence) et sont en tous cas caractéristiques de l'éprouvette. Leur utilisation facilite grandement la comparaison des teintes dans les systèmes de formulation car il suffit de faire correspondre les spectres L*, a* et b* de colorants ou pigments bien définis, seuls ou en combinaison, avec les spectres L*, a* et b* d'un produit de composition inconnue pour reproduire fidèlement la couleur de ce dernier.
Ce qu'il est donc difficile sinon impossible d'obtenir par une analyse colorimétrique classique qui a recours à la comparaison aléatoire des courbes d'absorption d'une teinte complexe d'une part et les courbes d'absorption des couleurs constitutives de cette teinte d'autre part, peut maintenant être facilement obtenu par simple spectrochromatométrie.

Une autre application des plus utiles de l'analyse chromatométrique est la détection et classification des défauts de structure dans la matière.
Les défauts tels que les gels, inclusions de résidus infondus, bulles d'air ou lignes de flux souvent présents dans les films de peintures et vernis ainsi que dans les plaques et profilés en polymères extrudés, ou bien encore toute autre pollution ou altération de la surface d'un produit ayant été exposé aux intempéries, sont aisément révélés en contrastant méthodiquement l'image numérique du produit à analyser. Pour ce faire, on procède par voie informatique à un étalement d'un ou de plusieurs des trois spectres L*, a* et/ou b* précédemment décrits, de manière qu'une des valeurs parmi les plus faibles sur l'axe de l'histogramme soit tirée vers le point minimal de l'échelle spectrale et qu'une des valeurs parmi les plus fortes soit tirée vers le point maximal de l'échelle.
L'image numérique reconstituée par l'ordinateur selon la nouvelle distribution chromatique resultant de l'étalement spectral, est alors fortement contrastée, en noir et blanc si seul le spectre L* a été étalé, en d'autres couleurs si l'on a préféré étaler les spectres a* et/ou b*. Si, selon sa résolution, l'image est contrastée jusqu'à révéler un certain nombre de défauts significatifs, le programme informatique est alors en mesure de permettre leur comptage puis leur identification selon leur forme, leur taille et leurs coordonnées dans le plan de l'image.

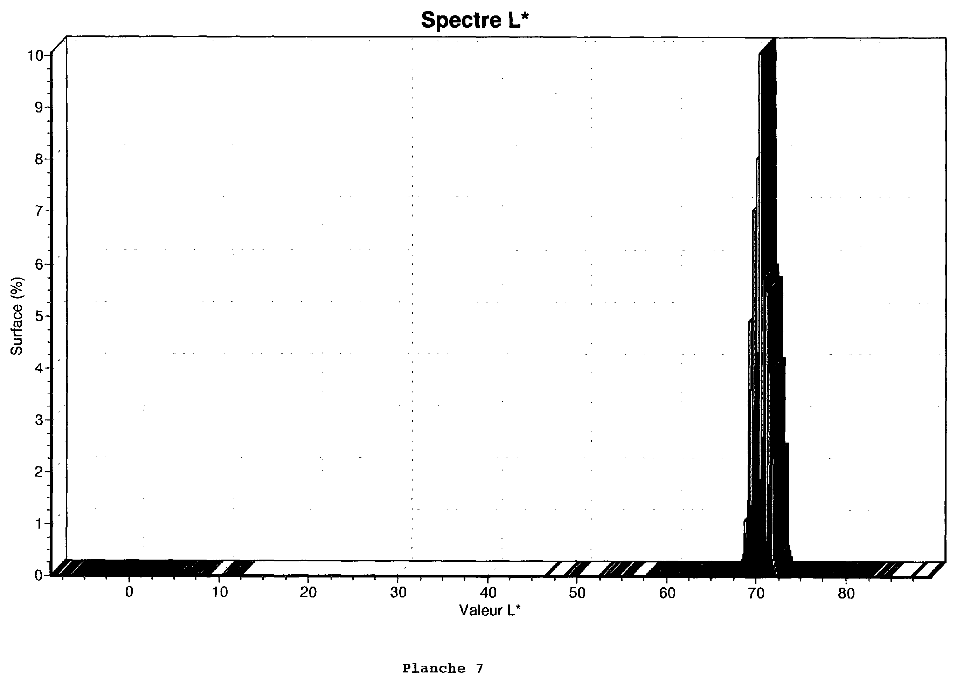

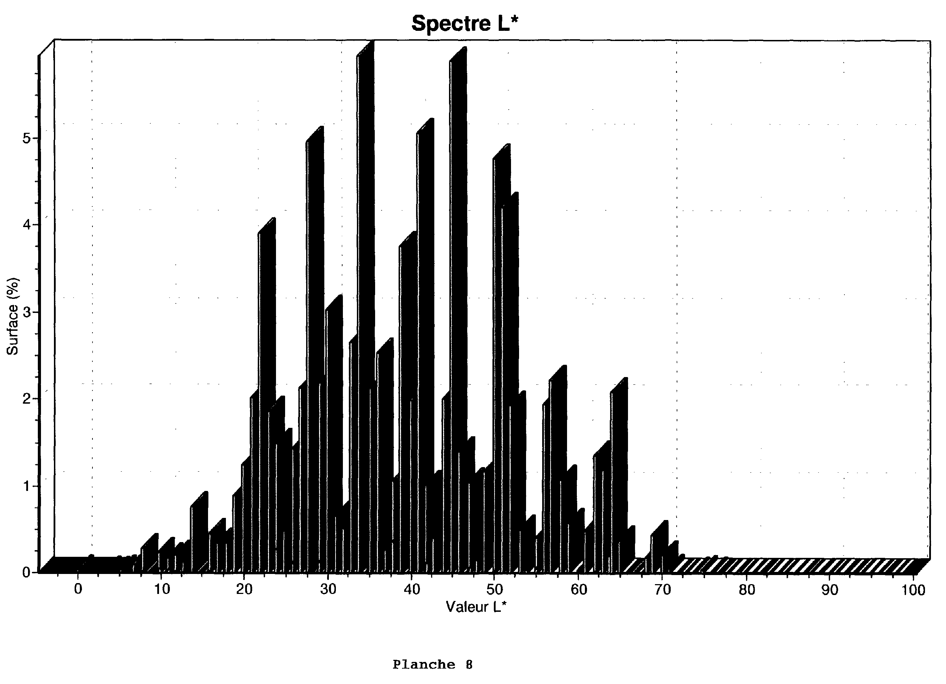

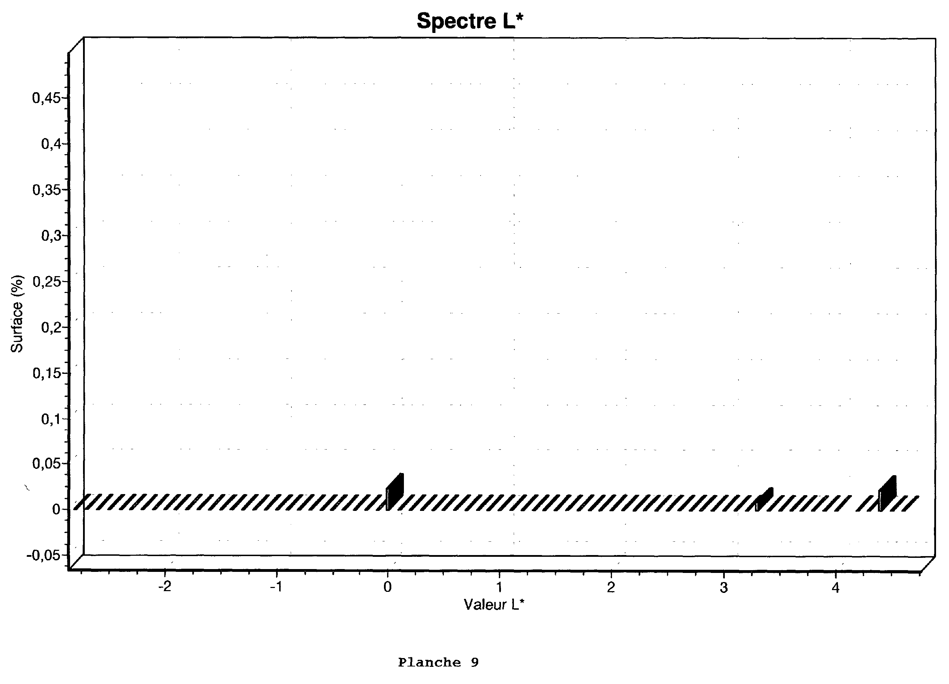

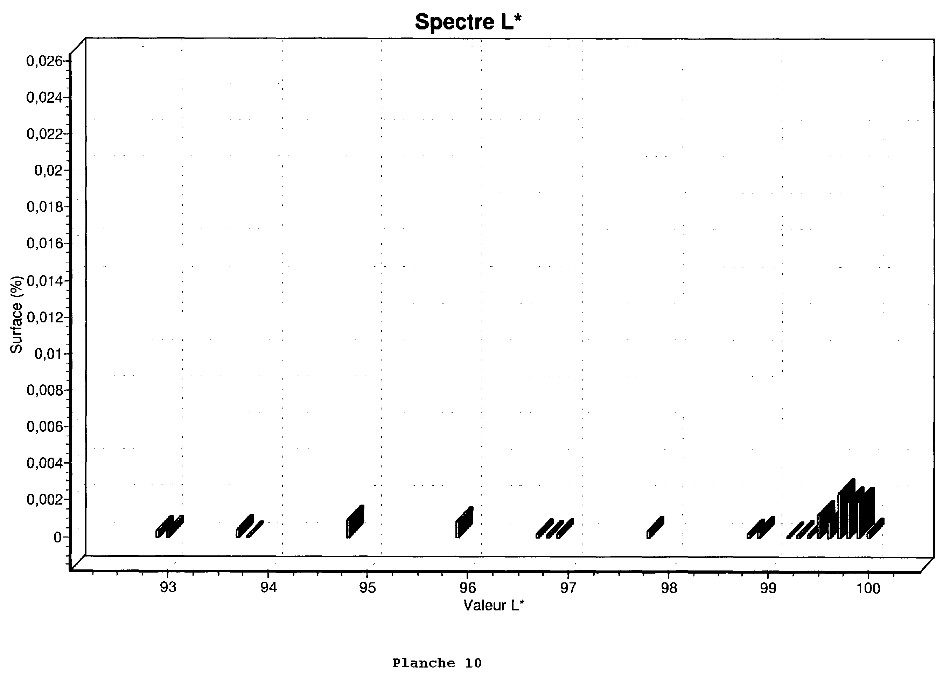

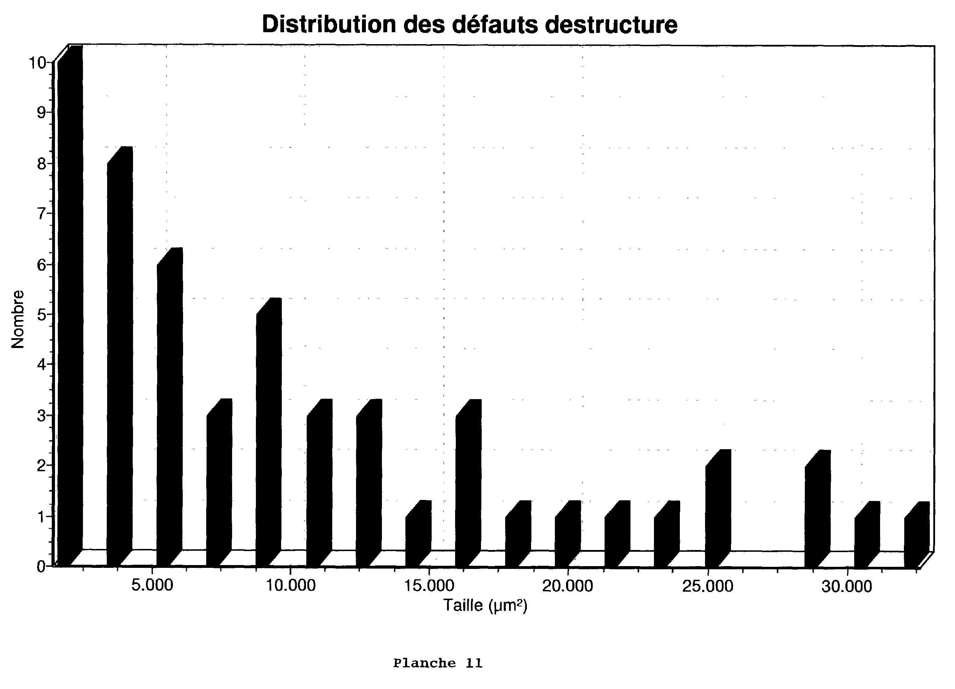

Considérons par exemple un film en polychlorure de vinyle (PVC) incolore et transparent dans lequel on soupçonne la présence, invisible à l'oeil nu, aussi bien de gels infondus de teinte claire que d'impuretés résiduelles sous forme de points foncés. Une image de ce film est saisie, soit par appareil photographique numérique, soit par scanneur, puis l'ordinateur en calcule les spectres L*, a* et b*. On observe qu'aucun défaut n'est visible sur l'image originale et que la distribution de la clarté de l'image s'étend de manière prépondérente entre les valeurs 68 et 74 de l'échelle du spectre L* (0-100)(Planche 7).
Le programme informatique fait alors en sorte que l'ordinateur puisse étaler cette partie du spectre L* allant de 68 à 74 sur toute l'étendue de l'échelle du spectre de façon que toutes les valeurs inférieures à 68 prennent la valeur 0 et que toutes celles supérieures à 74 prennent la valeur 100 (Planche 8). Celà a pour effet, par rapport à l'image originale, de contraster considérablement l'image reconstruite par ordinateur sur la base de ce nouveau spectre L* étalé, et de révéler aussi bien les défauts de teinte foncée dont la valeur L* est avoisinante du 0 (Planche 9) que les impuretés de teinte claire de valeurs L* proches de 100 (Planche 10). Les défauts de structure peuvent ensuite être comptés et leur distribution dans l'éprouvette, selon leur taille, peut être illustrée sous forme d'un histogramme séparé(Planche 11).

La procédure générale décrite ci-dessus pour contraster une image numérique par étalement de son spectre L* s'applique également à l'étalement des spectres a* et b* sur toute l'étendue de leur échelle (-120 à +120) lorsqu'on veut obtenir un contraste de l'image particulièrement prononcé dans une couleur ou dans une autre. Un exemple serait l'image d'une résine de PVC blanche contaminée par du PVC déjà partiellement dégradé, de couleur jaune mais tellement faible qu'indétectable à l'oeil nu.

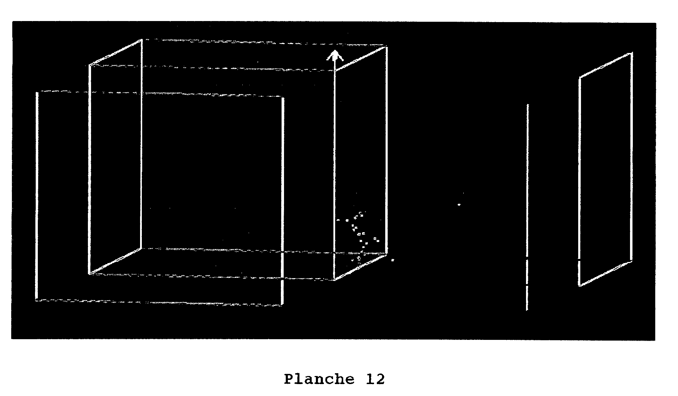

Pour complémenter le pouvoir descriptif des trois spectres chromatométriques L*, a* et b* décrits ci-dessus, on parvient, en utilisant le langage de programmation dit "Open Graphic Language", à élaborer dans l'espace un spectre unique CIE L*a*b* à partir de la combinaison simultanée des trois valeurs L* (sur un axe y), a* (sur un axe x) et b* (sur un axe z) de tous les points de l'image. Ce nouveau spectre chromatométrique a la forme d'une cage au sein de laquelle se répartissent tous les points de l'image selon leur couleur intrinsèque. Pour faciliter la représentation graphique de la distribution de tous ces points dans la cage, on groupe ceux-ci par classes de couleur, certains groupes étant naturellement peuplés de beaucoup plus de points que d'autres. En attribuant à chaque groupe une couleur distincte sur une échelle allant par exemple du jaune clair pour un groupe à population élevée au rouge foncé pour quelques points isolés, on apporte à la cage chromatométrique une quatrième variable permettant une appréciation détaillée de l'homogénéité de l'éprouvette dont on analyse l'image (Planche 12). On peut encore augmenter de manière significative la précision de la visualisation en procédant à la rotation de la cage sur l'un ou l'autre de ses trois axes et en permettant à l'oeil de l'observateur de pénétrer virtuellement jusqu'au coeur de la cage.

Comme il a été énoncé plus haut, l'élaboration des spectres et cages chromatométriques dans l'espace de couleurs CIE L*a*b* ne limite pas l'invention à ce seul système universel Le même processus de programmation binaire s'applique à l'élaboration de spectres et cages semblables dans d'autres espaces de couleurs, lesquels sont d'ailleurs souvent préférés par certaines industries comme, l'industrie informatique préférant par exemple l'espace RVB, celle de l'imprimerie l'espace CMJ.

## Revendications

1. Une nouvelle méthode analytique dite analyse chromatométrique permettant, par codage en couleur de l'image numérique d'un produit industriel quelconque, de déterminer la composition chromatique de ce produit et d'y détecter puis répertorier les défauts de structure les plus divers.

2. Un programme informatique de codage binaire selon la revendication 1 où sont répertoriés, sur n'importe quel support de données, tous les points constituant une image numérique, chaque point étant identifié par sa couleur intrinsèque et ses coordonnées dans le plan de l'image.

3. Un programme informatique de codage binaire selon la revendication 2 où l'espace de couleurs choisi pour répertorier les points constitutifs d'une image numérique est l'espace CIE L*a*b*

4. Un programme informatique de codage binaire selon la revendication 2 où l'espace de couleurs choisi pour répertorier les points constitutifs d'une image est le système complémentaire RVB/CMJ.

5. Un programme informatique de codage binaire selon la revendication 3 où les points constitutifs d'une image sont non seulement tous répertoriés dans l'espace CIE L*a*b* mais où ils sont également ordonnés en trois histogrammes de répartition selon leur valeur L*, a* ou b* pour former trois spectres distincts, les spectres chromatométriques L*, a* et b*.

6. Un programme informatique de codage binaire selon la revendication 5 où un spectre chromatométrique est étalé en tirant une des valeurs parmi les plus faibles sur l'axe de l'histogramme vers le point minimal de l'échelle spectrale et en poussant une des valeurs les plus fortes vers le point maximal de l'échelle.

7. Un programme informatique de codage binaire selon les revendications 1 et 2, où les valeurs CIE L*, a* et b* de tous les point qui constituent une image numérique sont combinées simultanément en open graphic language pour former une cage chromatométrique dans laquelle vient se loger un seul spectre CIE L*a*b* tridimensionnel.

8. Un programme informatique de codage binaire selon la revendication 7 où tous les points figurant dans la cage sont groupés par classes de couleur lesquelles sont différentiées par un codage séquentiel distinct.
